# EUROPEAN PATENT SPECIFICATION

(11) **EP 1 336 748 B1**
(45) Date of publication and mention of the grant of the patent: **04.05.2005**
(21) Application number: 03250901.0
(22) Date of filing: 13.02.2003
(51) Int. Cl.: F02M 25/028, F02B 47/02, F02B 29/04

(54) **Air feeding arrangement for piston engine**
Luftzufuhrsystem für eine Brennkraftmaschine
Système d'alimentation en air pour un moteur à piston

(30) Priority: 15.02.2002 FI 20020309
(43) Date of publication of application: 20.08.2003
(73) Proprietor: Wärtsilä Finland Oy, 65380 Vaasa (FI)
(72) Inventor: Raikio, Tero, 65230 Vaasa (FI); Rösgren, Carl-Erik, 65480 Vikby (FI)
(74) Representative: Hanson, William Bennett

(56) References cited:
- EP-A- 1 205 659
- WO-A-94/29579
- US-B1- 6 196 165

## Description

This invention relates to an air feeding arrangement for a piston engine comprising a feed channel for feeding combustion air into the engine, a collecting container, to which the feed channel is connected, feed pipes for feeding combustion air from the collecting chamber to each engine cylinder, and means for introducing moistening fluid into the combustion air. The invention also relates to a piston engine provided with such an air feeding arrangement.

At high combustion temperatures nitrogen oxides (NOx) are produced in cylinders of piston engines and are entrained in exhaust gases which pass into the air. Due to the detrimental effects of nitrogen oxide emissions on the environment it is desirable to minimise such emissions.

It is known that the addition of water to combustion air in the combustion process reduces the production of nitrogen oxides. This phenomenon is based, among other things, on the cooling effect of water.

To add water to combustion air before the cylinder is technically less complicated than direct injection of water at high pressure into a cylinder. However a lot of water is required to achieve a sufficiently high humidity level. It would be advantageous with regard to the durability of engine constructions and the control of the combustion process, to remove non-evaporated water before combustion air is fed into the engine cylinder, since water introduced in this manner is typically in the form of relatively large droplets.

An object of the present invention is to provide an air supply arrangement in which the problems of the prior art is minimised. In particular the present invention seeks to provide an air supply arrangement in which the humidification of the combustion air is performed advantageously and effectively.

According to the present invention an air supply arrangement for a piston engine comprising a feed channel for feeding combustion air into the engine, a collecting container to which said feed channel is connected, a separate feed pipe for feeding combustion air from the collecting chamber to the or each engine cylinder, and means for introducing moistening fluid into the combustion air, is characterised in that at least one droplet separator is arranged after the collecting container in the flow direction of the combustion air. In a multicylinder engine a separate droplet separator is preferably arranged in each feed pipe to separate liquid moistening fluid from the combustion air.

The means for introducing moistening fluid into the combustion air comprise a water tank or the like, with which the combustion air collecting container is in flow communication, e.g. via a return duct for separated water.

A convenient and reliable construction is achieved by providing at least one connecting piece for connecting the collecting container to a cylinder head of the engine. With such a construction the or each droplet separator is easy to maintain or replace. Preferably, the or each droplet separator is associated with a joint member of the or the associated connecting piece.

The means for introducing moistening fluid into the combustion air comprises at least one nozzle for introducing moistening fluid into the combustion air after a turbocharger and before the collecting container. In addition, the arrangement may comprise at least one heat exchanger for heating or cooling the combustion air.

Embodiments of the invention will now be described,by way of example only, with particular reference to the accompanying drawings, in which:
Fig. 1 schematically illustrates a piston engine to which an air supply arrangement according to the invention is adapted;
Fig. 2 schematically shows a detail of the piston engine according to Fig. 1;
Fig. 3 is a detail of Fig. 2 seen from the direction of arrow D; and
Fig. 4 illustrates another embodiment of the detail according to Fig. 2.

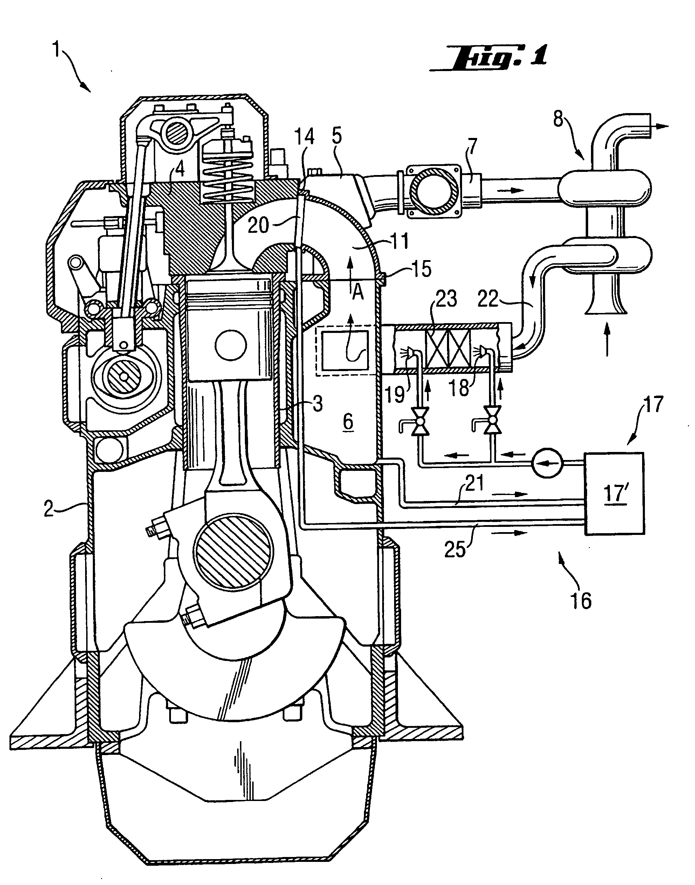

In the drawings a piston engine according to the invention is designated by the reference numeral 1. As can be seen in Fig. 1, the engine comprises an engine block 2, a cylinder 3 and a cylinder head 4. Suitably the engine comprises a plurality of cylinders each of which may have a cylinder head of its own. The engine also includes an exhaust manifold 7 connected to a turbocharger 8. Furthermore, the engine comprises a collecting container 6 for combustion air, arranged in the engine block 2 and into which the turbocharger 8 is arranged to feed combustion air. Each cylinder 3 of the engine is provided with a connecting piece 5 for various pressure mediums, by means of which connecting piece it is possible to arrange, for example, the cooling circulation of the cylinder head and the gas exchange of the cylinder. Such arrangements may be realised as shown, for instance, in US-A-5,213,068.

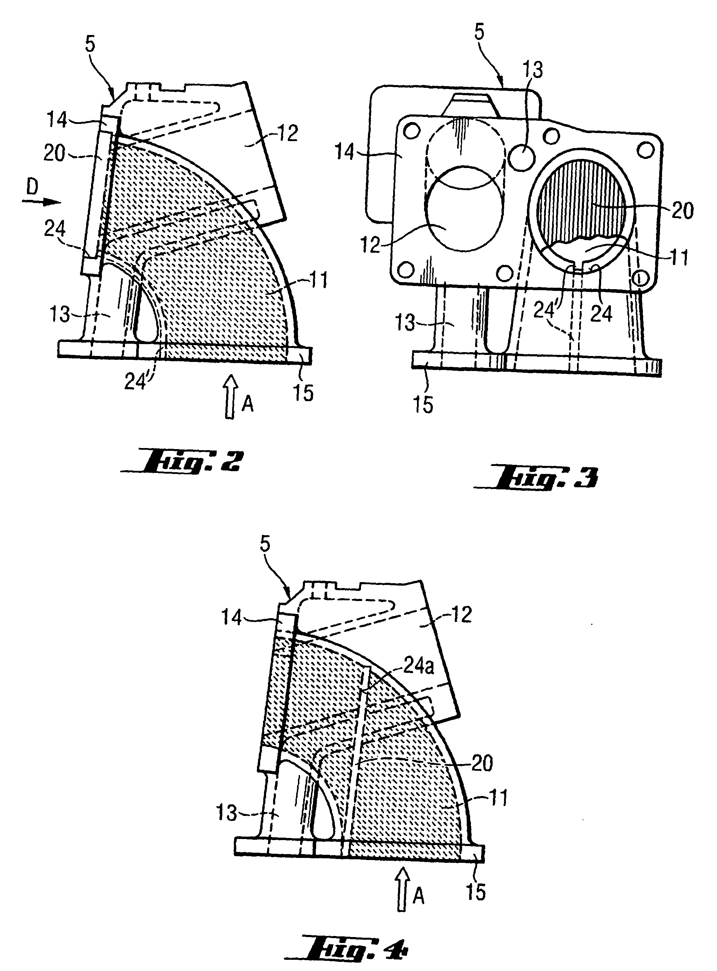

The connecting piece 5 has a feed pipe 11 for conducting combustion air from the collecting container 6 of the engine block 2 to the cylinder 3 via the cylinder head 4. The feed pipe 11 for combustion air is shown in hatched lines in Fig. 2 with the flow direction being shown by arrow A. In this embodiment the connecting piece 5 also has an exhaust gas channel 12 for conducting exhaust gases from the cylinder 3 via the cylinder head 4 to the exhaust pipe 7. In addition, the connecting piece 5 may include a cooling water channel 13 for recycling cooling water for the cylinder 3 via the cylinder head 4 and to a collecting channel for cooling water in the engine block 2. The connecting piece 5 is provided with joint members 14 and 15 for connecting to corresponding joint members of the cylinder head 4 and the engine block 2, respectively.

The turbocharger 8 is in connection with the collecting container 6 via a feed pipe or channel 22 for combustion air, usually at the other end of the container 6. Means 16 are also provided for introducing moistening fluid into the combustion air. The feed channel 22 for combustion air is provided with nozzles 18, 19 for injecting water into the combustion air. Also, one or several heat exchangers 23 is or are installed in the feed channel for either heating or cooling the combustion air as the situation requires. Combustion air is conducted from the collecting container 6 to each cylinder. Therefore the arrangement comprises a separate feed channel 11 for combustion air for each cylinder arranged in the joint member 15, the channel 11 being in connection with the collecting container 6 for combustion air.

While the engine is running, water is injected by means of the nozzles 18, 19 into the combustion air and, if required, heat is added to or removed from the combustion air by means of the heat exchanger 23. Air flows from the feed channel 22 into the collecting container 6 entraining water droplets as well. In the collecting container 6 some of the water may separate to the bottom thereof, e.g. due to reduced flow speed. The actual separation of water from the combustion air does not take place until just before the combustion air is conducted into the cylinder. For that purpose each feed pipe 11 for combustion air is provided with a droplet separator 20 for separating moistening fluid in liquid form from the combustion air.

Each droplet separator 20 may be arranged so that the separated water flows down to the collecting container 6 for combustion air. The collecting container 6 is in flow communication with the means 17 for introducing moistening fluid into the combustion air. This flow connection is provided to recirculate the separated water and to re-inject it into the combustion air. The means 17 for introducing moistening fluid into the combustion air comprise a water tank or the like 17', with which the collecting container 6 is in flow communication. For this purpose the air supply arrangement comprises a return duct 21 for separated water forming the flow connection between the collecting container 6 and the water tank or the like 17'.

The droplet separator 20 may also be arranged so that the separated water flows down via a separate channel 25 to the water tank or the like 17'. Depending on the situation, the assembly may comprise either a return duct 21 connecting the collecting container 6 and the water tank or the like 17', or a separate channel 25 connecting the droplet separator 20 and the water tank or the like 17'. The engine may also be provided with both channels at the same time, e.g. in a case where the amount of water to be separated is very large.

The arrangement is made particularly advantageous, if the droplet separator 20 is arranged in conjunction with the connecting piece 5 which connects the cylinder head 4 of the engine and the collecting container 6, whereby the fastening thereof is simple and reliable. The air supply arrangement according to the invention provides an efficient air treatment and humidification process, as water can be utilised more freely than in conventional arrangements and the separation of the used water as a liquid is efficient. The channel 22 for combustion air is typically located at one end of the collecting container 6 and water is injected into the combustion air before the collecting container 6, whereby the dwell time of the water in the combustion air before the water separation is prolonged. Also with this arrangement the increase of air humidity is more efficient. There may constantly be a predetermined amount of water in the collecting container, some of which is also vaporised into the combustion air.

Fig. 2 shows in more detail the connecting piece 5 connecting the cylinder head 4 of the engine and the collecting container 6. A recess 24 having a larger diameter than the flow passage is arranged for the droplet separators 20 in conjunction with a flange that is used as a joint member of the connecting piece 5 so that the droplet separator 20 is located between the flange of the connecting piece and the joint surface of the cylinder head 4. A groove 24' or an equivalent channel may be arranged to extend from the recess 24 to one of the joint surfaces 15 of the connecting piece for securing the flow of the separated water to the collecting container 6 so that air flowing to the cylinder does not substantially hamper or disturb the return of the water. Fig. 3 shows the connecting piece 5 of Fig. 2 seen from the direction of arrow D. As shown in Fig. 3, the droplet separator 20 extends to an area that is wider than the flow area, and thus it fills the recess hole 24. Preferably, this kind of a construction is used when the aim is to conduct the separated water into the collecting container 6. If the engine comprises a separate channel 25, as described above, the channel 25 is connected to the droplet separator 20 instead of the groove 24'.

Fig. 4 shows another possible location for a droplet separator 20 associated with the connecting piece. Here the droplet separator is associated with one of the joint surfaces 15 of the connecting piece 5. On the interior surface of the feed pipe 11 there is arranged a recess 24a, i.e. a groove or the like, at a certain angle relative to the surface 15, in which groove the droplet separator 20 can be installed by inserting it into the feed pipe 11 for combustion air. The groove supports the droplet separator and holds it in place. In this manner the area of the droplet separator can be made larger than in the case shown in Fig. 2 thus diminishing its flow resistance. The droplet separator has such a construction that it takes its position when the connecting piece 5 is fixed on the collecting container for the combustion air of the engine.

By adjusting the state and humidity of the combustion air it is possible to effect the combustion process and the composition and amount of combustion products in a manner known per se. The main advantage is the reduction of nitrogen oxide emissions.

Only a few embodiments of the invention are shown in the above-mentioned figures. The droplet separator, instead of being arranged in the connecting piece, may in some cases be arranged in means installed or associated with the cylinder head or the collecting container. Thus the invention is not limited to the above-described embodiments, but several other modifications are conceivable within the scope of the appended claims.

## Claims

1. An air supply arrangement for a piston engine (1) comprising a feed channel (22) for feeding combustion air into the engine, a collecting container (6), to which said feed channel (22) is connected, a separate feed pipe (11) for feeding combustion air from the collecting chamber (6) to the or each engine cylinder (3), and means (17) for introducing moistening fluid into the combustion air,
**characterised in that**
at least one droplet separator (20) is arranged after the collecting container (6) in the flow direction of the combustion air.

2. An air supply arrangement according to claim 1, **characterised in that** several feed pipes are provided and a separate droplet separator (20) is arranged in each feed pipe (11) to separate liquid moistening fluid from the combustion air.

3. An air supply arrangement according to claim 2, **characterised in that** said means (17) for introducing moistening fluid into the combustion air comprise water tank means (17'), and that the collecting container (6) for combustion air is in flow communication with the water tank means (17') via a return duct (21) for separated water.

4. An air supply arrangement according to claim 2, **characterised in that** said means (17) for introducing moistening fluid into the combustion air comprise water tank means (17'), and that each droplet separator (20) is in flow communication with the water tank means (17').

5. An air supply arrangement according to claim 3, **characterised in that** each droplet separator is in flow communication with the water tank means (17') via a return duct (25) for separated water.

6. An air supply arrangement according to any one of the preceding claims, **characterised in that** the or each droplet separator (20) is mounted in a connecting piece (5) connecting a cylinder head (4) of the engine and the collecting container (6).

7. An air supply arrangement according to claim 6, **characterised in that** the or each droplet separator (20) is mounted making use of joint members (14, 15) of the connecting piece (5).

8. An air supply arrangement according to any one of the preceding claims, **characterised in that** said means (17) for introducing moistening fluid into the combustion air comprises at least one nozzle (18, 19), and **in that** said at least one nozzle (18, 19) is arranged to introduce moistening fluid into the combustion air after a turbocharger (8) and before said collecting container (6).

9. An air supply arrangement according to any one of the preceding claims, **characterised in that** it includes at least one heat exchanger (23) for heating or cooling the combustion air.

10. A piston engine provided with an air feeding arrangement according to any one of the preceding claims.

## Patentansprüche

1. Luftversorgungsanordnung für einen Kolbenmotor (1) mit einem Zufuhrkanal (22) zur Zuführung von Verbrennungsluft in den Motor, einem Sammelbehälter (6), mit dem der Zufuhrkanal (22) verbunden ist, einem getrennten Zufuhrrohr (11) zur Zuführung von Verbrennungsluft aus der Sammelkammer (6) zu dem oder jedem Zylinder (3) und Mitteln (17) zur Einleitung von Befeuchtungsfluid in die Verbrennungsluft,
**dadurch gekennzeichnet, dass**
mindestens ein Tropfenabscheider (20) in Strömungsrichtung der Verbrennungsluft hinter dem Sammelbehälter (6) angeordnet ist.

2. Luftversorgungsanordnung nach Anspruch 1, **dadurch gekennzeichnet, dass** mehrere Zufuhrrohre vorgesehen sind und ein getrennter Tropfenabscheider (20) in jedem Zufuhrrohr (11) zur Trennung von flüssigem Befeuchtungsfluid von der Verbrennungsluft angeordnet ist.

3. Luftversorgungsanordnung nach Anspruch 2, **dadurch gekennzeichnet, dass** die Mittel (17) zur Einleitung von Befeuchtungsfluid in die Verbrennungsluft Wassertankmittel (17') umfassen und dass der Sammelbehälter (6) für Verbrennungsluft über einen Rückführkanal (21) für getrenntes Wasser mit den Wassertankmitteln (17') in Strömungsverbindung steht.

4. Luftversorgungsanordnung nach Anspruch 2, **dadurch gekennzeichnet, dass** die Mittel (17) zur Einleitung von Befeuchtungsfluid in die Verbrennungsluft Wassertankmittel (17') umfassen und dass jeder Tropfenabscheider (20) mit den Wassertankmitteln (17') in Strömungsverbindung steht.

5. Luftversorgungsanordnung nach Anspruch 3, **dadurch gekennzeichnet, dass** jeder Tropfenabscheider über einen Rückführkanal (25) für getrenntes Wasser mit den Wassertankmitteln (17') in Strömungsverbindung steht.

6. Luftversorgungsanordnung nach einem der vorhergehenden Ansprüche, **dadurch gekennzeichnet, dass** der oder jeder Tropfenabscheider (20) in einem einen Zylinderkopf (4) des Motors und den Sammelbehälter (6) verbindenden Verbindungsstück (5) angebracht ist.

7. Luftversorgungsanordnung nach Anspruch 6, **dadurch gekennzeichnet, dass** der oder jeder Tropfenabscheider (20) unter Verwendung von Verbindungsgliedern (14, 15) des Verbindungsstücks (5) angebracht ist.

8. Luftversorgungsanordnung nach einem der vorhergehenden Ansprüche, **dadurch gekennzeichnet, dass** das Mittel (17) zur Einleitung von Befeuchtungsfluid in die Verbrennungsluft mindestens eine Düse (18, 19) umfasst und dass die mindestens eine Düse (18, 19) zur Einleitung von Befeuchtungsfluid in die Verbrennungsluft hinter einem Turbolader (8) und vor dem Sammelbehälter (6) angeordnet ist.

9. Luftversorgungsanordnung nach einem der vorhergehenden Ansprüche, **dadurch gekennzeichnet, dass** sie mindestens einen Wärmetauscher (23) zum Erwärmen oder Kühlen der Verbrennungsluft enthält.

10. Kolbenmotor, der mit einer Luftzufuhranordnung nach einem der vorhergehenden Ansprüche versehen ist.

## Revendications

1. Système d'alimentation en air pour un moteur à piston (1), comprenant un conduit d'alimentation (22) destiné à alimenter le moteur en air comburant, un récipient collecteur (6), auquel est raccordé ledit conduit d'alimentation (22), un tuyau d'alimentation séparé (11) destiné à acheminer de l'air comburant de la chambre collectrice (6) au ou à chaque cylindre du moteur (3), et des moyens (17) pour introduire du fluide humidificateur dans l'air comburant,
**caractérisé en ce que**
l'on prévoit au moins un séparateur de gouttelettes (20) après le récipient collecteur (6) dans la direction de l'écoulement de l'air comburant.

2. Système d'alimentation en air selon la revendication 1, **caractérisé en ce que** l'on prévoit plusieurs tuyaux d'alimentation et un séparateur de gouttelettes séparé (20) est prévu dans chaque tuyau d'alimentation (11) pour séparer le fluide humidificateur liquide de l'air comburant.

3. Système d'alimentation en air selon la revendication 2, **caractérisé en ce que** lesdits moyens (17) pour introduire du fluide humidificateur dans l'air comburant comprennent un moyen de réservoir d'eau (17') et **en ce que** le récipient collecteur (6) pour l'air comburant est en communication d'écoulement avec le moyen de réservoir d'eau (17') par le biais d'une conduite de retour (21) pour l'eau séparée.

4. Système d'alimentation en air selon la revendication 2, **caractérisé en ce que** lesdits moyens (17) pour introduire du fluide humidificateur dans l'air comburant comprennent un moyen de réservoir d'eau (17') et **en ce que** chaque séparateur de gouttelettes (20) est en communication d'écoulement avec le moyen de réservoir d'eau (17').

5. Système d'alimentation en air selon la revendication 3, **caractérisé en ce que** chaque séparateur de gouttelettes est en communication d'écoulement avec le moyen de réservoir d'eau (17') par le biais d'une conduite de retour (25) pour l'eau séparée.

6. Système d'alimentation en air selon l'une quelconque des revendications précédentes, **caractérisé en ce que** le ou chaque séparateur de gouttelettes (20) est monté dans une pièce de connexion (5) reliant une culasse (4) du moteur au récipient collecteur (6).

7. Système d'alimentation en air selon la revendication 6, **caractérisé en ce que** le ou chaque séparateur de gouttelettes (20) est monté en utilisant des organes de joint (14, 15) de la pièce de connexion (5).

8. Système d'alimentation en air selon l'une quelconque des revendications précédentes, **caractérisé en ce que** lesdits moyens (17) pour introduire un fluide humidificateur dans l'air comburant comprend au moins une buse (18, 19) et **en ce que** l'au moins une buse (18, 19) est prévue pour introduire du fluide humidificateur dans l'air comburant après un turbocompresseur (8) et avant ledit récipient collecteur (6).

9. Système d'alimentation en air selon l'une quelconque des revendications précédentes, **caractérisé en ce qu'**il comporte au moins un échangeur de chaleur (23) pour chauffer ou refroidir l'air comburant.

10. Moteur à piston pourvu d'un système d'alimentation en air selon l'une quelconque des revendications précédentes.
